# EUROPÄISCHE PATENTSCHRIFT

(11) **EP 1 044 642 B1**
(45) Veröffentlichungstag und Bekanntmachung des Hinweises auf die Patenterteilung: **10.12.2003**
(21) Anmeldenummer: 99107591.2
(22) Anmeldetag: 15.04.1999
(51) Int. Cl.: A47J 27/08

(54) **Kochgefäss**
Cooking vessels
Récipient de cuisson

(43) Veröffentlichungstag der Anmeldung: 18.10.2000
(73) Patentinhaber: WMF WÜRTTEMBERGISCHE METALLWARENFABRIK AG, 73309 Geislingen/Steige (DE)
(72) Erfinder: Kreiza, Jürgen, 73329 Kuchen (DE)
(74) Vertreter: Grünecker, Kinkeldey, Stockmair & Schwanhäusser Anwaltssozietät

(56) Entgegenhaltungen:
- CH-A- 254 203
- DE-C- 33 658
- US-A- 1 766 366
- US-A- 5 148 938

## Beschreibung

Die Erfindung bezieht sich auf ein Kochgefäß zum Kochen unter Innendruck.

Dampfdruckkochtöpfe sind seit langer Zeit bekannt und in großer Zahl auf dem Markt. Ein derartiges Kochgefäß wurde beispielsweise bereits in der DE 33 658 C vorgeschlagen. Bei diesem Kochgefäß wird der Deckel auf dem Gefäßteil durch drei Riegelelemente befestigt, die mit einem Ende schwenkbar auf einer zentral angeordneten Drehscheibe des Deckels angeschraubt sind und sich durch eine Führung am Deckel bis über den Deckelrand hinaus erstrecken. Am Gefäßteil sind nach oben stehende Ösen bzw. eine umlaufende Nut vorgesehen, die das Gefäßteil verunstalten. Beim Verdrehen der Drehscheibe bewegen sich die Riegelelemente spiralig und müssen in die Ösen eingefädelt werden. Beim Druckkochen entwickeln sich jedoch nicht unbeträchtliche Innendrücke, die bei modernen Töpfen bis 3 bar betragen können. Dieser Innendruck wirkt auf den Deckel und muss beim bekannten Kochgefäß vollständig von der Verschraubung des Riegelelementes mit der zentralen Drehscheibe aufgenommen werden, wobei die gesamte Länge des Riegelelementes als Biegehebel wirkt. Abgesehen davon, dass die bekannte Topfverriegelung auf keinen Fall modernen Sicherheitsstandards entsprechen würde, müssen auf jeden Fall die Riegelelemente und die Befestigungs-/Drehschrauben in hohem Maße überdimensioniert werden, um zu verhindern, dass der Deckel wegfliegt. Außerdem ist das Gefäßteil ganz sicher nicht als Serviergefäß geeignet.

Später hat sich bei Dampfdruckkochgefäßen der Bajonettverschluss zwischen Deckel und Gefäßteil durchgesetzt, wobei der Schließdruck durch den Innendruck aufgebracht wird, der die Bajonettstege des Deckels in feste Anlage mit den Bajonettstegen des Gefäßteiles drückt. Nachteilig an dieser Ausgestaltung ist jedoch, dass Deckel und Gefäßteil nur in einer vorbestimmten Ausrichtung zueinander geschlossen und geöffnet werden können. Weiterhin stören die vorstehenden Bajonettstege das äußere Erscheinungsbild, so dass das Gefäßteil beispielsweise nicht als Serviergefäß verwendet werden kann. Erhöhte Sicherheitsanforderungen haben darüber hinaus zur Entwicklung weiterer Deckelsicherungen geführt, die zusätzlich zur vom Innendruck aufgebrachten Schließkraft für die Bajonettverschlüsse ein Riegelelement verwenden, das in Abhängigkeit vom Innendruck durch senkrecht übereinanderliegende Ausnehmungen in den Bajonettstegen von Deckel und Gefäßteil eingeschoben wird und ein Verdrehen des Deckels sicher verhindert, solange das Gefäßteil noch unter Innendruck steht. Diese zusätzliche Deckelsicherung macht darüber hinaus den Bajonettverschluss komplizierter.

Die US-A-5 148 938 beschreibt ein Dampfdruckkochgefäß, das einen Gefäßkörper und einen Deckel aufweist, wobei auf dem Deckel eine Vielzahl von Riegelelementen vorgesehen sind. Der Deckel ist als Steckdeckel ausgebildet und in die obere Öffnung des Gefäßkörpers versenkt. Oberhalb derjenigen Stelle an der der Deckel im drucklosen Zustand sitzt, ist die Wandstärke des Gefäßkörpers reduziert und mit Ausnehmungen versehen, die die Riegelelemente beim Verriegeln des Kochgefaßes aufnehmen. Es ist nicht beschrieben, dass Anlageflächen für ein Abscherbelastungspaar im Zusammenhang mit den Riegelelementen vorgesehen sind. Es wird, im Gegenteil, beschrieben, dass die Ausnehmungen so bemessen sind, dass sich der Deckel unter Wirkung des Innendrucks anheben kann und die Riegelelemente fest gegen die obere Begrenzung der Ausnehmung im Gefäßkörper drücken soll. Durch die reduzierte Wandstärke und die Ausweichmöglichkeit des Riegelelementes nach unten ist somit mit einer Biegebelastung zu rechnen. In einem weiteren Ausführungsbeispiel fehlt zwar die verringerte Wandstärke, der Deckel soll sich jedoch ebenfalls mit seinen Riegelelementen nach oben bewegen können, und die Anlagefläche ist abgeschrägt, so dass auch hier eine Biegebelastung auftritt.

Weitere Dampfdruckkochtöpfe ohne Bajonettverschluss sind beispielsweise in der DE 32 32 907 A1 oder DE 40 26 166 A1 beschrieben. Die bekannten Verschlüsse verwenden über eine Kulissensteuerung von einem Zentralknopf aus radial bewegbare Klammern, die auf dem Deckel gelagert sind und in der Art von Bajonettverschlüssen einen umgebördelten Rand am Kochtopf untergreifen. Durch den nicht unbetrachtlichen Innendruck werden jedoch die Klammern relativ großen Biegekräften ausgesetzt, die dazu tendieren, die Klammern aufzubiegen. Deshalb müssen die Klammern und vor allen Dingen ihre Lagerung am Deckel relativ groß dimensioniert werden.

Der Erfindung liegt somit die Aufgabe zugrunde, ein Kochgefäß zum Kochen unter Innendruck mit einer konstruktiv einfachen, materialsparenden und trotzdem drucksicheren Befestigung des Deckels am Gefäßteil zu schaffen.

Die Aufgabe wird durch die in Anspruch 1 angegebenen Merkmale gelöst.

Durch die erfindungsgemäße Ausgestaltung wird eine völlig neue Lastverteilung auf die Verriegelungseinrichtung erreicht. Da das erfindungsgemäße Riegelelement nunmehr im wesentlichen nur auf Abscherung, gegebenenfalls mit einem sehr kurzen Biegehebel, belastet wird, kann es bei gleicher mechanischer Festigkeit wesentlich leichter bzw. kleiner ausgebildet sein. Dabei ist es durch die Anordnung wenigstens einer Anlagefläche des Abscherbelastungspaares in einer Ausnehmung möglich die Anlageflächen des Abscherbelastungspaares möglichst eng benachbart anzuordnen. Da diese Ausnehmung im Deckel angeordnet ist, bleibt das Erscheinungsbild des Gefäßteiles unbeeinträchtigt

Vorteilhafte Weiterbildungen der Erfindung sind den Unteransprüchen zu entnehmen.

Die Maßnahme gemäß Anspruch 2 dient zur weiteren Verkürzung des Biegehebels.

Anspruch 3 beschreibt eine besonders bevorzugte Verschieberichtung der Riegelelemente.

Da das erfindungsgemäße Riegelelement relativ schwach ausgebildet sein kann, ist es möglich, dieses gemäß Anspruch 5 in der äußeren Oberfläche des Deckels zu versenken, so dass der Deckel eine im wesentlichen glatte Oberfläche aufweist, die weniger verschmutzt und bei Verschmutzung besser gereinigt werden kann.

Durch seine relativ schwache Ausbildung ist es weiterhin möglich, das Riegelelement gemäß Anspruch 6 auch im Inneren eines doppelwandig ausgebildeten Deckels unterzubringen.

Ein Ausführungsbeispiel der Erfindung wird nachfolgend anhand der Zeichnungen näher erläutert. Es zeigen:
- Fig. 1: eine schematische, perspektivische Darstellung eines erfindungsgemäß ausgebildeten Kochgefäßes, und
- Fig. 2: den Schnitt II-II aus Fig. 1.

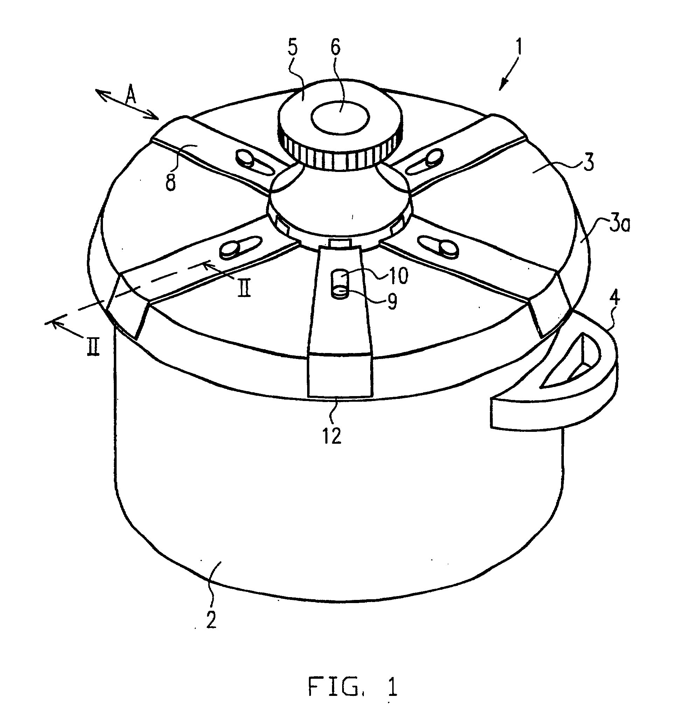

In Fig. 1 ist ein Dampfdruckkochgefäß 1 zum Kochen unter Innendruck dargestellt, das ein Gefäßteil 2 und einen Deckel 3 aufweist. Das Gefäßteil 2 ist in der Art eines üblichen Kochtopfes ausgebildet, besteht beispielsweise aus Edelstahl oder aus emailliertem Stahl, weist den üblichen, nicht dargestellten Wärmeverteilboden auf und ist mit Handgriffen 4 versehen, die im dargestellten Ausführungsbeispiel als normale Topfgriffe ausgebildet sein können, da die bei Bajonettverschluss-Kochgefäßen üblichen Stielgriffe zum Anzeigen des Bajonettverschlusseingriffes nicht mehr notwendig sind. Ohne Deckel kann das Kochgefäß 1 somit als normaler Kochtopf und/oder als Serviergefäß verwendet werden.

Der Deckel 3 enthält einen zentral angeordneten Knauf 5, der das bei Dampfdruckkochtöpfen übliche Kochventil 6 aufnimmt und beispielsweise eine der bekannten Kulissensteuerungen 7 zum Verschieben einer Vielzahl (z.B. sechs) von sich radial erstreckenden und mit gleichen Abständen in Umfangsrichtung verteilt angeordneten Riegelelementen 8 enthält. Die Riegelelemente 8 sind streifenförmig ausgebildet, liegen auf der Oberfläche des Deckels 3 auf oder sind in sie hinein versenkt und sind mit Hilfe eines Stiftes 9, der durch ein Langloch 10 in den Riegelelementen 8 ragt, in ihrem durch die Kulissensteuerung 7 bewirkten, radialen Verschiebebewegung in Richtung des Doppelpfeiles A geführt.

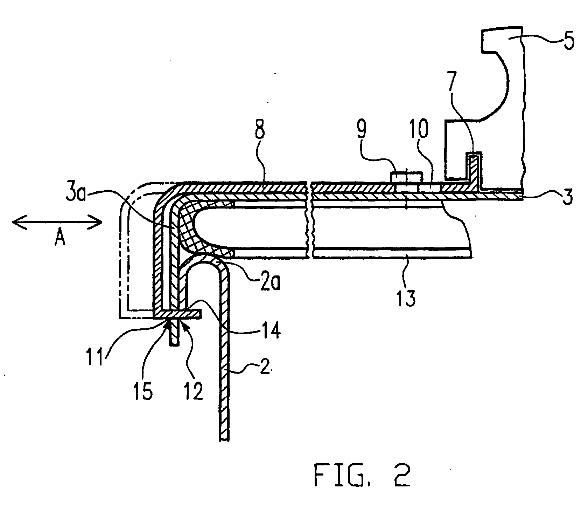

Wie auch in Verbindung mit Fig. 2 ersichtlich, hat der Deckel 3 einen nach unten abgebogenen Randbereich 3a, der mit seiner freien Randkante einen nach außen umgebördelten oder abgewinkelten Gefäßrand 2a des Gefäßteils 2 übergreift. Das Riegelelement 8 folgt der Kontur des Deckels 3 und des Randbereiches 3a, ist jedoch vor dessen freier Kante L-förmig mit einem im wesentlichen geradlinig verlaufenden Eingriffsbereich 11 radial nach innen abgebogen. Der Eingriffsbereich 11 erstreckt sich durch eine Ausnehmung 12, die im Abstand zur freien Randkante des Deckelrandes 3a durch den Deckelrand 3a hindurch ausgebildet ist. Die Ausnehmung 12 folgt bevorzugt genau den Abmessungen des Eingriffsbereiches 11.

Die Ausnehmung 12 liegt an einer Stelle des Deckelrandes 3a, die bei zwischengelegter Dichtung 13 mit einer unteren, im wesentlichen horizontal verlaufenden Randkante 14 des Gefäßrandes 2a fluchtet.

Wird nun das Riegelelement 8 durch die Kulissensteuerung 7 radial nach innen gezogen, so dass der Eingriffsbereich 11 sich durch die Ausnehmung 12 des Deckels 3 bis unter die Randkante 14 des Gefäßrandes 2a erstreckt, und wird in diesem Zustand der Innenraum des Gefäßteiles 2 unter Druck gesetzt, so wird der Deckel 3 angehoben, so dass sich eine untere Randkante 15 der Ausnehmung 12 des Deckelrandes 3a an den Eingriffsbereich 11 anlegt und diesen an die Randkante 14 des Gefäßrandes 2a des Gefäßteiles 2 drückt. Die beiden Kanten 14 und 15 bilden somit die Anlageflächen eines Abscherbelastungspaares, das einander entgegengesetzte Kräfte von im wesentlichen gleicher Größe in den als Widerlager dienenden Eingriffsbereich 11 einleitet.

Idealerweise passt der Deckelrand 3a so straff auf den Gefäßrand 2a, dass die beiden Anlageflächen 14 und 15 unmittelbar nebeneinander liegen, so dass auch die Widerlager am Eingriffsbereich 11 unmittelbar benachbart sind, wobei fast kein Biegemoment auf den Eingriffsbereich ausgeübt wird. Es schadet jedoch nicht, wenn zwischen den beiden Anlageflächen 14 und 15 ein kleiner Abstand in Längs- bzw. Axialrichtung des Eingriffsbereiches 11 vorhanden ist, da auch die dabei auftretenden, geringfügigen Biegemomente noch beherrschbar sind. Wichtig ist, dass das Riegelelement hauptsächlich auf Abscherung belastet wird.

Die Länge des Eingriffsbereiches 11 und sein Verschiebeweg sollte so bemessen sein, dass er sich in seiner in Fig. 2 strichpunktiert gezeichneten, zweiten Stellung zum Öffnen des Deckels noch innerhalb der Ausnehmung 12 am Deckelrand 3a befindet, so dass der Eingriffsbereich 11 gegen Beschädigung geschützt ist.

Der Schutz gegen Beschädigung kann unter Umständen noch verbessert werden, wenn die Riegelelemente 8 in einem doppelwandig ausgebildeten Deckel 3 untergebracht sind, wobei beispielsweise die in Fig. 2 gezeigten Wandung des Deckels 3 als Unterschale verwendet und durch eine weitere Oberschale abgedeckt wird. Bei dieser Ausgestaltung ist es dann nicht mehr notwendig, die Riegelelemente 8 in die äußere Oberfläche zu versenken.

In Abwandlung der beschriebenen und gezeichneten Ausführungsbeispiele können Einzelheiten der Fig. untereinander ausgetauscht werden. So ist es beispielsweise möglich, den Deckel in einer Kombination aus Stülp- und Steckdeckel auszubilden, ohne dass sich das Riegelelement durch beide senkrecht verlaufende Deckelrandbereiche erstrecken muss. Es ist weiterhin möglich, das Gefäßteil beispielsweise ohne Umbördelung, d.h. mit zylindrischem Rand, auszubilden und auch im Gefäßteil eine Ausnehmung vorzusehen, durch die sich das Riegelteil gemäß Fig. 2 erstrecken kann. Das Riegelteil kann neben der gezeichneten Streifen- und Stabform andere Formen aufweisen, beispielsweise abgekröpft oder gabelförmig ausgebildet sein oder einen viereckigen Querschnitt haben. Die Anzahl der Riegelelemente kann ebenso variiert werden wie ihre Bewegungsrichtung.

## Patentansprüche

1. Kochgefäß (1) zum Kochen unter Innendruck mit einem Gefäßteil (2), einem Deckel (3) und wenigstens einem Riegelelement (8) zum druckdichten Befestigen des Deckels auf dem Gefäßteil, wobei das Riegelelement (8) zwischen einer ersten verriegelten Stellung und einer zweiten Stellung zum Öffnen des Deckels bewegbar ist, wobei am Gefäßteil (2) und am Deckel (3) wenigstens jeweils eine Anlagefläche (14, 15) für das Riegelelement (8) vorgesehen sind, die ein Abscherbelastungspaar bilden und so angeordnet sind, dass sie unter dem Einfluss des Innendrucks an einander benachbarten Widerlagern (11) entgegengerichtete Kräfte auf das Riegelelement (8) ausüben, **dadurch gekennzeichnet, dass** eine der Anlageflächen (14) des Abscherbelastungspaares am Rand (2a) des Gefäßteiles (2) angeordnet ist, wobei der Deckel (3) mit einem Randbereich (3a) den Gefäßrand (2a) von außen übergreift, wobei im Randbereich (3a) des Deckels (3) eine Ausnehmung (12) mit der anderen Anlagefläche (15) des Abscherpaares vorgesehen ist, und wobei das Riegelelement (8) in seiner ersten Stellung von außen durch die Ausnehmung (12) bis in einen Eingriff mit der Anlagefläche (14) des Gefäßrandes (2a) ragt.

2. Kochgefäß nach Anspruch 1, **dadurch gekennzeichnet, dass** die Widerlager durch einen geradlinig verlaufenden Eingriffsbereich (11) des Riegelelementes (8) gebildet sind.

3. Kochgefäß nach Anspruch 1 oder 2, **dadurch gekennzeichnet, dass** das Riegelelement (8) in Radialrichtung (A) verschiebbar am Deckel (3) gelagert ist.

4. Kochgefäß nach einem der Ansprüche 1 bis 3, **dadurch gekennzeichnet, dass** der Gefäßrand (2a) eine Umbördelung nach außen zeigt, und dass die Anlagefläche (14) durch eine nach unten weisende Randkante der Umbördelung (2a) gebildet ist.

5. Kochgefäß nach einem der Ansprüche 1 bis 4, **dadurch gekennzeichnet, dass** das Riegelelement (8) streifenförmig ausgebildet und in der äußeren Oberfläche des Deckels (3) versenkt angeordnet ist.

6. Kochgefäß nach einem der Ansprüche 1 bis 5, **dadurch gekennzeichnet, dass** der Deckel (3) doppelwandig ausgebildet ist und das Riegelelement (8) im Inneren des Deckels untergebracht ist.

7. Kochgefäß nach einem der Ansprüche 1 bis 6, **dadurch gekennzeichnet, dass** der Deckelrand (3a) und der Gefäßrand (2a) so aufeinander passen, dass die Anlageflächen (14, 15) unmittelbar benachbart sind.

## Claims

1. A cooking vessel (1) for cooking under internal pressure, comprising a vessel part (2), a lid (3) and at least one locking element (8) for the pressure-tight securing of the lid to the vessel part, said locking element (8) being movable between a first locked position and a second position for opening the lid, wherein the vessel part (2) and the lid (3) have each formed thereon at least one contact surface (14, 15) for the locking element (8), said contact surfaces forming a shear-load pair and being arranged such that under the action of the internal pressure acting on neighboring abutments (11) they exert oppositely directed forces on the locking element (8), **characterized in that** one of the contact surfaces (14) of the shear-load pair is arranged on the edge (2a) of the vessel part (2), wherein the lid (3) grips with a rim portion (3a) over the vessel edge (2a) from the outside, a recess (12) is provided in the rim portion (3a) with the other contact surface (15) of the shear pair, and the locking element (8) in its first position projects from the outside through the recess (12) into engagement with the contact surface (14) of the vessel edge (2a).

2. The cooking vessel according to claim 1, **characterized in that** that the abutments are formed by a straight-lined engagement portion (11) of the locking element (8).

3. The cooking vessel according to claim 1 or 2, **characterized in that** said locking element (8) is displaceably supported on the lid (3) in the radial direction (A).

4. The cooking vessel according to any one of claims 1 to 3, **characterized in that** the vessel edge (2a) has an outwardly flanged portion, and that the contact surface (14) is formed by a downwardly oriented edge of said flanged portion (2a).

5. The cooking vessel according to any one of claims 1 to 4, **characterized in that** said locking element (8) is strip-shaped and arranged in countersunk fashion in the outer surface of the lid (3).

6. The cooking vessel according to any one of claims 1 to 5, **characterized in that** the lid (3) is double-walled and the locking element (8) is accommodated in the interior of the lid.

7. The cooking vessel according to any one of claims 1 to 6, **characterized in that** the lid edge (3a) and the vessel edge (2a) are matched to one another such that the contact surfaces (14, 15) are directly adjacent.

## Revendications

1. Récipient de cuisson (1) pour cuire sous pression interne, avec un corps de récipient (2), un couvercle (3) et au moins un élément de verrouillage (8) pour la fixation étanche sous la pression du couvercle sur le corps du récipient, moyennant quoi l'élément de verrouillage (8) est mobile entre une première position de verrouillage et une deuxième position pour l'ouverture du couvercle, moyennant quoi sont prévues sur le corps du récipient (2) et sur le couvercle (3) au moins une surface d'installation (14, 15) dans chaque cas pour l'élément de verrouillage (8), qui forment un couple de charge de sécurité à cisaillement et sont disposées de sorte qu'elles exercent sous l'influence de la pression interne sur les butées (11), voisines entre elles, des forces en sens inverse sur l'élément de verrouillage (8), **caractérisé en ce qu'**une des surfaces d'installation (14) du couple de charge de sécurité à cisaillement est disposée sur le bord (2a) du corps de récipient (2), moyennant quoi le couvercle (3) s'accroche, à partir de l'extérieur, par une zone de bord (3a) sur le bord du récipient (2a), moyennant quoi dans la zone de bord (3a) du couvercle (3) est prévu un creux (12) en contact avec l'autre surface d'installation (15) du couple de sécurité par cisaillement, et moyennant quoi l'élément de verrouillage (8) dans sa première position dépasse à partir de l'extérieur, à travers le creux (12) jusqu'à un engrènement avec la surface d'installation (14) du bord du récipient (2a).

2. Récipient de cuisson selon la revendication 1, **caractérisé en ce que** la butée est construite à travers une zone d'engrènement (11), courant en ligne droite, de l'élément de verrouillage (8).

3. Récipient de cuisson selon la revendication 1 ou 2, **caractérisé en ce que** l'élément de verrouillage (8) est logé sur le couvercle (3), pouvant glisser en direction radiale (A).

4. Récipient de cuisson selon l'une quelconque des revendications 1 à 3, **caractérisé en ce que** le bord du récipient (2a) montre un bordage circonférentiel vers l'extérieur et **en ce que** la surface d'installation (14) est construite selon une arête de bord (2a) orientée vers le bas.

5. Récipient de cuisson selon l'une des revendications 1 à 4, **caractérisé en ce que** l'élément de verrouillage (8) est configuré en forme de bande et est disposé plongé dans la surface externe du couvercle (3).

6. Récipient de cuisson selon l'une des revendications 1 à 5, **caractérisé en ce que** le couvercle (3) est configuré avec une double paroi et que l'élément de verrouillage (8) est placé à l'intérieur du couvercle.

7. Récipient de cuisson selon l'une quelconque des revendications 1 à 6, **caractérisé en ce que** le bord du couvercle (3a) et le bord du récipient (2a) s'adaptent l'un à l'autre de sorte que les surfaces d'installation (14, 15) sont immédiatement voisines.
